Europäisches Patentamt

European Patent Office

Office européen des brevets

(11) Publication number: **0 445 647 A2**

# EUROPEAN PATENT APPLICATION

(21) Application number: 91102948.6

(22) Date of filing: 27.02.91

(51) Int. Cl.5: **G10C 3/12**, C08L 67/06, C08L 101/00, C08K 3/22, C08J 9/00, //(C08L67/06,31:04)

(30) Priority: 27.02.90 JP 46696/90

(43) Date of publication of application:
11.09.91 Bulletin 91/37

(84) Designated Contracting States:
DE GB

(71) Applicant: YAMAHA CORPORATION
10-1, Nakazawa-cho
Hamamatsu-shi Shizuoka-ken(JP)

(72) Inventor: Fukushima, Toshiharu, c/o Yamaha
Corporation
10-1, Nakazawa-cho
Hamamatsu-shi, Shizuoka-ken(JP)

(74) Representative: Geyer, Ulrich F. et al
Wagner & Geyer Patentanwälte
Gewürzmühlstrasse 5
W-8000 München 22(DE)

(54) Key material and method of making it.

(57) Instead of the natural ivory, a key material having an ivory-like-quality is formed by an artificial material, i.e., hardened resin (1). The hardened resin is formed by a matrix (2) made of thermosetting resin and filler. In this matrix, a plenty of thermoplastic resin particles (3) are homogeneously dispersed, so that a plurality of micro-voids (4) are formed around each thermoplastic resin particle. Preferably, the thermosetting resin, filler and thermoplastic resin particle respectively contain un-saturated polyester resin, aluminium hydroxide and vinyl acetate resin.

EP 0 445 647 A2

The present invention relates to a key material used for manufacturing a key of a piano and the like and a method of making such key material.

Conventionally, the ivory is well known as the highly evaluated and high-quality material which is used for manufacturing the key, at least its surface portion, of the keyboard instrument such as the piano, organ, accordion etc. The ivory is the ideal material for the key because of the following features which are required as the quality of the key.

(a) The ivory has the moderate water absorption. This water absorption is required to absorb the sweat of performer's fingers and thereby avoid the slip due to the sweat.

(b) The ivory has the moderate surface smoothness and frictional coefficient, which affect the touch feeling of the key to be depressed.

(c) The ivory has the superior appearance.

(d) The ivory has the moderate hardness, which is required to obtain the good touch feeling of the key to be depressed and avoid the abrasion due to the long-term usage.

(e) The ivory has the moderate processability.

Recently, however, some African countries prohibit the capture of the elephant in order to avoid the extermination of the elephant, so that the supply of the natural ivory is stopped and it cannot be obtained.

In order to cope with the shortage and supply-stop of the ivory, the synthetic resin such as the acrylic resin is broadly used as the key material, because there is no need to worry about its supply shortage in general.

Such synthetic resin is satisfactory in the appearance and processability. However, the surface of the key made of such synthetic resin is too smooth so that the performer's finger slips on it easily. In addition, due to the absence of water absorption, when the performer's finger is sweated, the above-mentioned finger slip is occurred with high probability, which causes the touch mistake (i.e., event in which the performer touches and depressed the un-desirable key by mistake).

It is accordingly an object of the present invention to provide a brand-new and artificial key material having the good touch quality, performance ability and durability.

It is another object of the present invention to provide a method of making the above-mentioned artificial key material.

In a first aspect of the present invention, there is provided a key material composed of:

a matrix made of thermosetting resin and filler; and

a plenty of thermoplastic resin particles which are homogeneously dispersed into the matrix,

wherein a plurality of micro-voids are formed around each thermoplastic resin particle to thereby form hardened resin, by which the key material is to be made.

In a second aspect of the present invention, there is provided a method of making a key material comprising steps of:

homogeneously dissolving or dispersing thermoplastic resin into un-hardened liquid of thermosetting resin;

simultaneously adding and dispersing filler into the un-hardened liquid of thermosetting resin;

stirring or mixing the un-hardened liquid of thermosetting resin in which the thermoplastic resin and filler are dispersed to thereby make mixed solution; and

hardening the mixed solution to thereby form said key material.

Further objects and advantages of the present invention will be apparent from the following description, reference being had to the accompanying drawings wherein a preferred embodiment of the present invention is clearly shown.

In the drawings:

Fig. 1 is a diagrammatical sectional view illustrating structure of a key material according to an embodiment of the present invention; and

Fig. 2 is a graph showing a humidity-friction relationship of a key material to be measured.

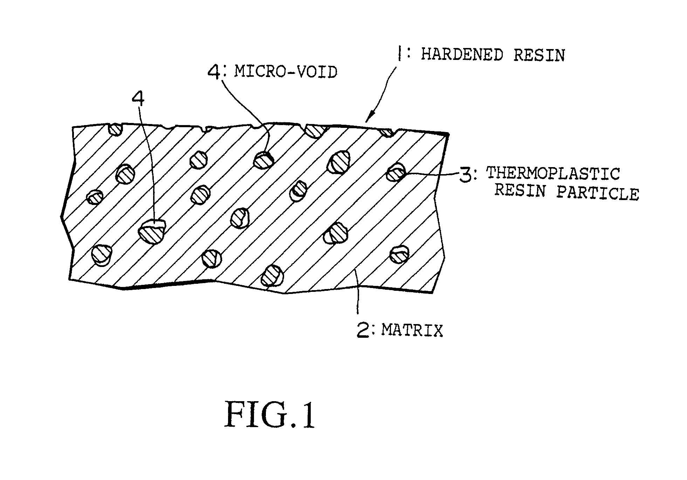

Now, detailed description will be given with respect to a preferred embodiment of the present invention by referring to Fig. 1.

[A] Key Material

Fig. 1 shows an example of hardened resin which is used as the key material according to an embodiment of the present invention. This hardened resin 1 is formed such that a large number of thermoplastic resin particles 3 are dispersed homogeneously in a matrix 2 formed by the thermosetting resin and filler. In addition, micro-voids 4 are formed around these thermoplastic resin particles 3.

As the thermosetting resin which forms the matrix 2, it is possible to use the unsaturated polyester resin, di-allyl-phthalate resin, epoxy resin, allyl ester resin, melamine resin and the like.

In addition, the thermoplastic resin which forms the thermoplastic resin particles 3 must have the specific feature in that it can be dissolved or dispersed in the particle form in the un-hardened liquid of the thermosetting resin, it is not mutually dissolved into the hardened thermosetting resin and it is deposited in the particle form in the hardened resin 1. For example, when employing the unsaturated polyester resin as the thermosetting resin, it is possible to employ the vinyl acetate resin, acrylic resin, polyethylene terephthalate resin and the like as the thermoplastic resin to be matched with the thermosetting resin.

In the present embodiment, the dispersion rate of the thermoplastic resin particles to be dispersed in the matrix 2 is set in the range of 1% to 15%. Because, the dispersion rate of 1% or less deteriorates the water, absorption for the performer's sweat, while the dispersion rate of 15% or more deteriorates the key surface state so that the key will be easily soiled. Further, it is preferable that the mean diameter of the thermoplastic resin particle 3 is set in the range of 1 to 100 $\mu$m. If there is a difference between the longitudinal and lateral lengths of such particle 3, the longitudinal length is defined as the mean diameter. In this case, if the mean diameter of the particle 3 is out of the range of 1 to 100 $\mu$m, the key has the un-preferable frictional coefficient on its surface, which deteriorates the appearance of the key.

As the filler which is used to form the matrix 2, it is possible to employ the aluminium hydroxide, calcium carbonate, talc, glass powder, coral sand, shirasu powder, hydroxy-apatite, potassium titanate whisker and the like. In the present embodiment, the mixing ratio of the filler is preferably set in the range of 100 to 250 weight-portion against 100 weight-portion of the thermosetting resin. In this case, the kind and mixing ratio of the filler are determined in such a manner that the specific gravity of the hardened resin 1, as a whole, becomes similar to that of the ivory and the thermal contraction rate of the matrix 2 becomes sufficiently lower than that of the thermoplastic resin. Further, the whisker, i.e., fibrous filler, can offer the reinforcing effect, while the porous filler such as the coral sand, hydroxy-apatite, shirasu powder can offer the moderate water absorption. Thus, the above-mentioned fibrous filler and porous filler are preferable.

Meanwhile, the foregoing micro-void 4 functions as one kind of the gap formed around each thermoplastic resin particle 3. Such micro-voids are formed such that they surround the whole portion or one part of each particle 3.

As shown in Fig. 1, the thermoplastic resin particles 3 and micro-voids 4 are exposed on the surface of the hardened resin 1. Such surface is formed as the surface of the key material.

[B] Method of Making the Key Material

Next, description will be given with respect to the method of making key material described above.

First, there is provided the un-hardened liquid made of the thermosetting resin such as the un-saturated polyester resin. Thereafter, the predetermined amount of the filler and thermoplastic resin powder such as the vinyl acetate resin are compounded into the un-hardened liquid, and then well-stirred so that the thermoplastic resin is dissolved or dispersed and the filler is dispersed homogeneously. In this case, the thermoplastic resin is dissolved into the reactive monomer. For example, in the case where the thermosetting resin is set as the unsaturated polyester resin, styrene monomer or di-allyl-phthalate monomer is employed as the reactive monomer. More specifically, the reactive diluent such as the butyl-glycidyl-ether and allyl-glycidyl-ether is employed in case of the epoxy resin, while the di-allyl-phthalate monomer is employed in case of the di-allyl-phthalate resin. Thereafter, the solution which is obtained by dissolving the thermoplastic resin into the reactive monomer as described above can be added to the un-hardened liquid of the thermosetting resin.

Then, the mixed solution is cast into the forming die having the desirable shape, in which the un-hardened liquid of the thermosetting resin is to be hardened. When hardening, it is possible to apply the heat and/or pressure to the un-hardened liquid to be hardened.

As the above-mentioned hardening process progresses, the un-hardened liquid of the thermosetting resin is gelled. Then, the thermoplastic resin dissolved into such un-hardened liquid can not be maintained as it is, so that it is gradually deposited and dispersed as the small particles within the gel of the thermosetting resin. When employing the thermoplastic resin which is easily dispersed at initial period, it is necessary to pay a great attention such that the thermoplastic resin will not be aggregated by hardening the thermosetting resin homogeneously. At this time, the reactant must be at high temperature (e.g., 100 to 150 $^{\circ}$C) due to the reactive heat of the hardening and external heat applied from the external heater (not shown).

Thereafter, when the hardening process is completed, the reactant is solidified, and then the temperature thereof is lowered to the room temperature and cooled down. In this case, the contraction rate of the thermoplastic resin particle to be cooled down is larger than that of the matrix to be cooled down, wherein the matrix is formed by the thermosetting resin and filler as described before. Thus, the thermoplastic resin particle is contracted at high contraction rate as comparing to the matrix. Due to such contraction difference, the thermoplastic resin particle is peeled from the matrix at its surface, so that the micro-voids are formed in the circumference of the thermoplastic resin particle.

Lastly, the surface of the hardened resin to be formed as described heretofore is ground to cut off the skin layer which is formed thereon while forming the hardened resin. Thus, it is possible to obtain the key material, as shown in Fig. 1, in which a large number of micro-voids 4 and thermoplastic resin particles 3 are exposed on its surface.

Since a plenty of micro-voids 4 are exposed on the surface of the above-mentioned key material, such key material can absorb the sweat of the performer's fingers moderately and it is possible to prevent the surface of the key material from being wet with the dew even if the humidity becomes high in its surroundings. Due to the irregularity (i.e., small recesses and convex portions) to be formed on the surface, the key material can be fitted with the finger well, so that the touch feeling of the key material to be touched by the finger tip becomes similar to that of the ivory. Further, it is possible to design the key material such that the frictional coefficient thereof becomes closer to that of the ivory.

The key material as described above can be directly used to form the key by itself. In addition, when manufacturing such key material in the sheet form, the sheet made of the key material can be attached to the surface of the wooden key material together to thereby form the key. When employing the aluminium hydroxide or coral sand as the filler of the keyboard material, the key made of such key material is colored white so that it can be directly used as the white key. In addition, by coloring such key material black, the key material can be used as the black key.

[C] Example

Next, description will be given with respect to the actual example of the key material according to an embodiment of the present invention as described above.

The foregoing vinyl acetate resin is dissolved into the styrene monomer by the concentration of 30 weight-percentage to thereby provide the solution. This solution of 30 weight-portion, potassium titanate whisker of 56 weight-portion, coral sand of 30 weight-portion, aluminium hydroxide of 100 weight-portion and hardening agent (TBPB) of 1.0 weight-portion are blent together with the un-saturated polyester resin of 70 weight-portion. By being stirred and mixed, the mixed solution can be obtained.

Such mixed solution is cast into the flat die, and hardened by applying the heat and pressure thereto by use of the hot-press device, to thereby make the hardened material. In this case, such solution is heated by the temperature of 145 °C, pressed by the pressure of 10 MPa, which are applied for four minutes. Then, the hardened material is cooled down to the room temperature, and removed from the die. Thereafter, the surface of the hardened material is ground by the abrasive paper and further subject to the buff finish, so that the keyboard material is to be made.

By varying the relative humidity, the dynamic frictional coefficient at the surface of the key material is measured to thereby study about the relationship between the humidity and friction. In this case, the deerskin is used as the material to be rubbed with the key material, wherein the deerskin is set at the condition of 50% RH. In addition, the measuring temperature is set at 23 °C.

For the comparison, the above-mentioned measurement and study are also made on the other key materials made of the ivory and acrylic resin.

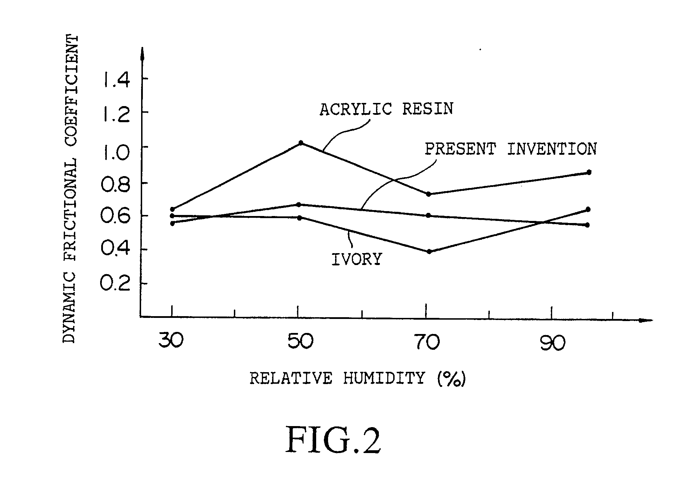

The measurement result is shown in Fig. 2.

As being obvious from the measurement result shown in Fig. 2, the key material according to the present invention can have the frictional coefficient which is similar to that of the ivory. In addition, the present key material has a special feature in that it is relatively stable in the frictional coefficient thereof, regardless of the variation of the humidity.

Lastly, this invention may be practiced or embodied in still other ways without departing from the spirit or essential character thereof as described heretofore. Therefore, the preferred embodiment described herein is illustrative and not restrictive, the scope of the invention being indicated by the appended claims and all variations which come within the meaning of the claims are intended to be embraced therein.

**Claims**

1. A key material characterized by composed of:
   a matrix (2) made of thermosetting resin and filler; and
   a plenty of thermoplastic resin particles (3) which are homogeneously dispersed into said matrix,
   wherein a plurality of micro-voids (4) are formed around each thermoplastic resin particle to thereby form hardened resin (1), by which said key material is to be made.

2. A method of making a key material characterized by comprising steps of:
   homogeneously dissolving or dispersing thermoplastic resin into up-hardened liquid of thermosetting resin;
   simultaneously adding and dispersing filler into said un-hardened liquid of thermosetting resin;
   stirring or mixing said up-hardened liquid of thermosetting resin in which said thermoplastic resin and said filler are dispersed to thereby make mixed solution; and
   hardening said mixed solution to thereby form said key material.

3. A key material as defined in claim 1 wherein said thermosetting resin, said filler and said thermoplastic resin particle respectively contain up-saturated polyester resin, aluminium hydroxide and vinyl acetate resin.

FIG.1

FIG.2